# EUROPEAN PATENT SPECIFICATION

(11) **EP 2 147 742 B1**
(45) Date of publication and mention of the grant of the patent: **15.06.2011**
(21) Application number: 08425505.8
(22) Date of filing: 24.07.2008
(51) Int. Cl.: B23Q 3/18, B23B 31/36

(54) **Compensation device for deformations correction after roughing with decoupling**
Vorrichtung zur Kompensation von Verformungen eines Werkstücks nach einer ersten Bearbeitung
Dispositif de compensation des déformations d'une pièce après un premier usinage

(43) Date of publication of application: 27.01.2010
(73) Proprietor: C.B. Ferrari S.p.A., 21020 Mornago VA (IT)
(72) Inventor: Bianchi, Renato, 21020 Morgano (VA) (IT)

(56) References cited:
- EP-A- 1 825 942
- GB-A- 764 879
- US-A- 3 014 391

## Description

### FIELD OF THE INVENTION

The present invention relates generally to disengageable automatic deformation compensation devices capable of compensating for undesired deformations of a workpiece during machining operations.

More particularly, it relates to a workpiece support according to the preamble of claim 1 (see, for example, EP-1825942).

### PRIOR ART

The deformation compensation of a workpiece is conventionally accomplished by automatic deformation compensation devices capable of unlocking the rigid constraint between the workpiece and the secondary support spindle activating three degrees of freedom. This activation lets the workpiece return to a fully relaxed position releasing any type of stress without further operations. The three degrees of freedom are internal to the equipment and are not structurally separable.

### SUMMARY OF INVENTION

The present invention provides a workpiece support according to claim 1, wherein a disengageable automatic system for torsional and radial compensation is realized by the assembly of two parts: a secondary support with direct transmission (unitary transmission ratio) and an automatic device mounted on it. The system is used together with another rotational synchronized axis (primary support). The torsional relaxation is carried out by the secondary support and the radial relaxation is carried out by the automatic device. They are structurally independent and separable. In case of combined use, the effects let the workpiece achieve its natural position (deformed) and realize the complete workpiece relaxation. Leaving enough stock on the workpiece during the roughing operation (greater than the deformation expected), the finishing operation can be performed immediately without losing the zero point. In such a way the deformation compensation is automatic.

### BRIEF DESCRIPTION OF THE DRAWINGS

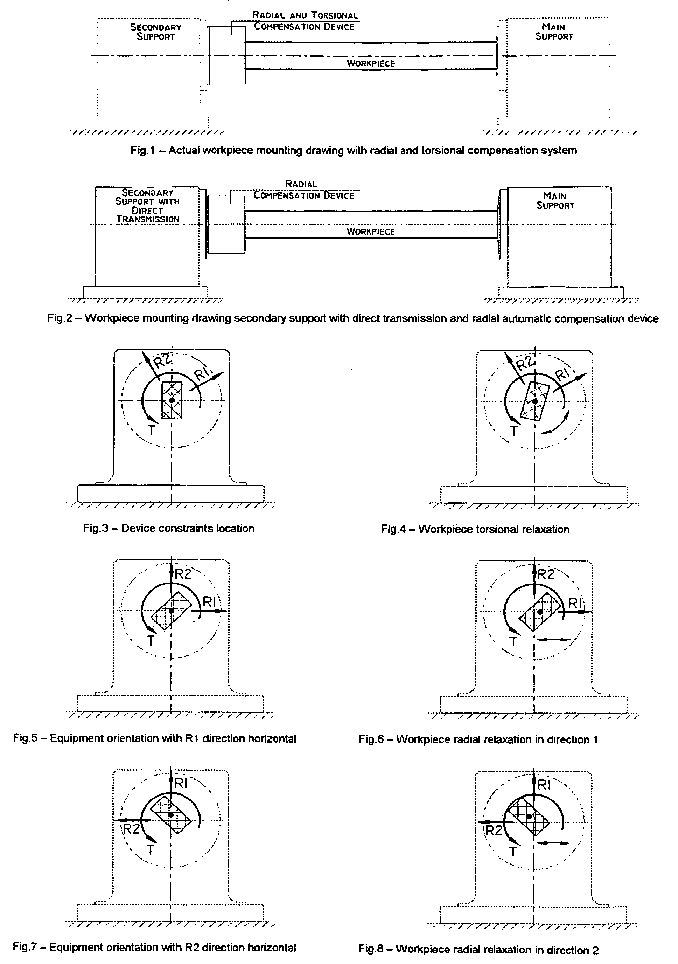

- Fig.1: Actual workpiece mounting drawing with radial and torsional compensation system
- Fig.2: Workpiece mounting drawing: secondary support with direct transmission and radial automatic compensation device
- Fig.3: Device constraints location
- Fig.4: Workpiece torsional relaxation
- Fig.5: Equipment orientation with R1 direction horizontal
- Fig.6: Workpiece radial relaxation in direction 1
- Fig.7: Equipment orientation with R2 direction horizontal
- Fig.8: Workpiece radial relaxation in direction 2

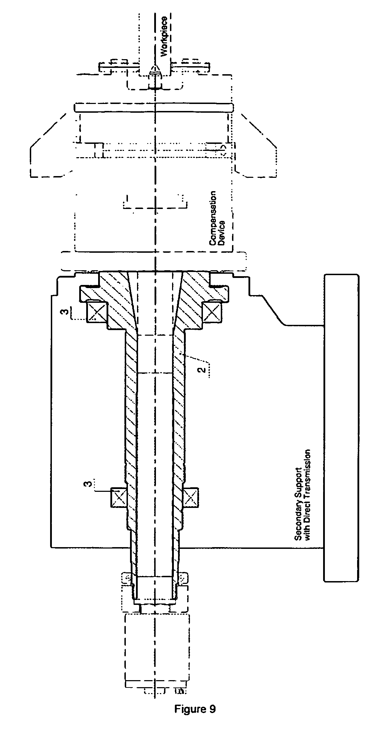

- Fig.9: Longitudinal section of the secondary support with direct transmission

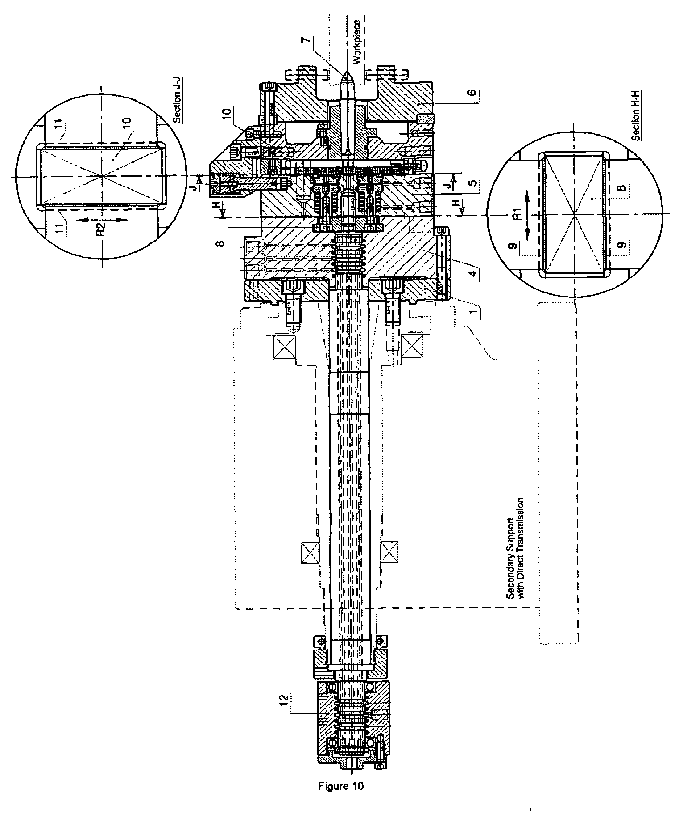

- Fig.10: Longitudinal section of the compensation device

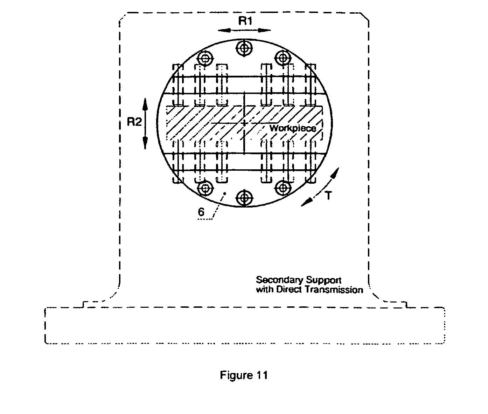

- Fig.11: Front view of the compensation device and the secondary support with direct transmission

### DETAILED DESCRIPTION OF THE DISENGAGEABLE COMPENSATION DEVICE

The automatic compensation system enables the unlocking of the rigid constraint between the workpiece and the secondary support activating three degrees of freedom: two inside the compensation device, one inside the secondary support. This activation lets the workpiece return to a fully relaxed position, releasing any type of stress without further operations.
1. Two flanges totally coupled together (1) (4) support and torsionally transfer an automatic compensation device to the secondary support spindle (2). The automatic compensation device is torsionally rigid and attaches the workpiece end to the secondary support spindle.
2. The position synchronism, by which the gantry rotary axes system is handled, guarantees to transmit the torsional rigidity of motion between the secondary support and the workpiece. Deactivation of the gantry system enables the secondary support spindle, the compensation device and the workpiece end to rotate freely, supported by the rolling bearings (3).
3. The sub-system made by the cross-slide system (5), flange (6), tailstock (7) and workpiece is radially constrained along R1 direction to the flange (4) by six spring-actuated hydraulic cylinders. Giving hydraulic pressure to the cylinders, the springs' load will be annealed, the clamping system (8) will be released and the cross-slide system, flange, tailstock and workpiece will be free to move along the R1 radial direction supported by rollers slideways (9).
4. The sub-system made by flange (6), tailstock (7) and workpiece is radially constrained along R2 direction to the cross-slide system (5) by six spring-actuated hydraulic cylinders. Giving hydraulic pressure to the cylinders, the springs' load will be annealed, the clamping system (10) will be released and flange, tailstock and workpiece will be free to move along the R2 radial direction supported by rollers slideways (11).
5. The clamping flange (6) holds the workpiece, keeping its center-hole on the tailstock (7).
6. The hydraulic pressure is carried to the right final destination by the hydraulic rotary union (12).

The operation of the disengageable automatic compensation device will now be described:
The gantry rotary axes system is normally activated and guarantees the transmission of torsional rigidity of motion by the full system; the automatic compensation device is normally locked. The constraints are automatically removed by the CNC program.
The relaxation procedure must be executed with the following sequence:
   1. deactivate the synchronized gantry rotary axes system, which removes the rotational rigid constraint T inside the secondary support,
   2. workpiece torsional relaxation,
   3. re-activate the position synchronism of the gantry rotary axes system in the new position, which restores the rotational rigid constraint T,
   4. orient the equipment (and the workpiece) so that the radial translation R1 is horizontal,
   5. remove the radial R1 translation rigid constraint,
   6. workpiece radial relaxation in direction 1 (horizontal). The relaxation must be performed in horizontal position so that the part's weight doesn't influence the natural position,
   7. restore R1 translational rigid constraint,
   8. rotate the equipment (and the workpiece) by 90° so that the radial translation R2 is horizontal,
   9. remove the radial R2 translation rigid constraint,
   10. workpiece radial relaxation in direction 2 (horizontal). The relaxation must be performed in horizontal position so that the part's weight doesn't influence the natural position,
   11. restore R2 translational rigid constraint.

The main advantages introduced by the equipment are:
- the radial and torsional deformations compensation is automatic and can be performed separately or contextually for the torsional and/or radial direction;
- the construction design of the secondary support and the compensation device are simpler and more reliable than the actual solutions;
- finish machining is performed immediately after roughing and relaxation cycle;
- the whole machining cycle (roughing, part relaxation and finish machining) is performed in one process and can be programmed and automatically executed on NC machines. No manual adjustment is requested.

## Claims

1. Workpiece support wherein the workpiece is fixed between a first and secondary support, comprising:
■ a compensation device which allows to remove a radial constraint, located between the workpiece and the secondary support, wherein the compensation device is operatable
• in a locked state in which the workpiece and the secondary support are rigidly constrained and the processing of the workpiece can take place
• in an unlocked state in which the workpiece is radially free to move with respect to the secondary support and .thereby the radial constraint is removed, wherein the activation of the compensation device can be performed without removing the workpiece from the machine and without losing the workpiece machining origin, wherein the compensation device enables first and second degree of freedom which are translational degrees of freedom and enable the workpiece's end to translate in two perpendicular directions laid on a plane normal to the support axis, defining displacement vectors composition in a radial direction and thereby enabling radial relaxation, thereby achieving a fully relaxed position of the workpiece, releasing any type of stress without further operations.
■ and a secondary support is operatable in gantry configuration mode that is coupled with the primary support , wherein the imposed synchronism between the;two supports constrains torsonially the workpiece that is machined,
**characterised in that** :
■ the first and secondary support are with direct transmission with unitary transmission ratio and
■ the secondary support is operatable in single axis configuration mode, wherein the synchronism de-activation can be performed without removing the workpiece from the machine and without losing the workpiece machining origin, which is referred to the primary support position transducer, wherein the secondary support enables one degree of freedom which is a rotational degree of freedom and which enables the workpiece's end to rotate around the support axis and thereby enables torsional relaxation without further operations

2. Method of using the workpiece support according to claim 1 wherein the finish machining is performed immediately after roughing and relaxation cycle

3. Method of using the workpiece support according to claim 1 wherein the relaxation cycle is repeated more than one time during the roughing operation and finish machining is performed immediately after.

## Patentansprüche

1. Werkstückstütze, **dadurch gekennzeichnet, dass** das Werkstück zwischen einer primären und einer sekundären Stütze befestigt ist, bestehend aus:
■ einer Ausgleichsvorrichtung, die es ermöglicht, eine radiale Spannung zwischen dem Werkstück und der zweiten Stütze zu beseitigen, wobei die Ausgleichsvorrichtung bedienbar ist
• im blockierten Zustand, in dem das Werkstück und die sekundäre Stütze steif befestigt sind und die Bearbeitung des Werkstücks ausgeführt werden kann
• im freigegebenen Zustand, in dem das Werkstück sich gegenüber der sekundären Achse radial frei bewegen kann und dabei die radiale Spannung beseitigt, wobei die Aktivierung der Ausgleichsvorrichtung durchgeführt werden kann, ohne das Werkstück aus der Maschine zu entfernen und ohne dass die ursprüngliche Bearbeitungsstelle des Werkstücks verloren geht, wobei die Ausgleichsvorrichtung einen ersten und zweiten Freiheitsgrad zulässt, welche Translationsgrade der Freiheit sind und es ermöglichen, dass das Ende des Werkstücks in zwei senkrechte Richtungen auf einer zur Stützachse normal stehenden Ebene verschoben wird, wobei die Verschiebungsvektoren in einer Radialrichtung definiert werden und dabei die Radialentspannung ermöglichen, wodurch das Werkstück eine vollständig spannungsfreie Position erhält und jegliche Art von Belastung ohne weitere Operationen entspannt wird
und einer sekundären Stütze, bedienbar in hergestellter Gantry-Konfiguration, die mit der primären Stütze gekoppelt ist, wobei der auferlegte Synchronismus zwischen den beiden Stützen das in Bearbeitung befindliche Werkstück drehend belastet, **dadurch gekennzeichnet, dass**:
■ die primäre und die sekundäre Stütze mit direkter Übertragung mit unitärem Übertragungsverhältnis sind und
■ die sekundäre Stütze im einachsigen Konfigurationsmodus bedienbar ist, wobei die Deaktivierung des Synchronismus durchgeführt werden kann, ohne das Werkstück aus der Maschine zu entfernen und ohne dass die ursprüngliche Bearbeitungsstelle des Werkstücks verloren geht, was sich auf den Positions-Transducer der primären Stütze bezieht, wobei die sekundäre Stütze einen Freiheitsgrad ermöglicht, der ein Rotationsfreiheitsgrad ist und der es dem Ende des Werkstücks ermöglicht, sich um die Stützachse zu drehen und **dadurch** ohne weitere Operationen eine Drehentspannung ermöglicht.

2. Methode für die Verwendung der Werkstückstütze gemäß Anspruch 1, wobei die Schlichtbearbeitung sofort nach dem Schrupp- und Relaxationszyklus erfolgt.

3. Methode für die Verwendung der Werkstückstütze gemäß Anspruch 1, wobei der Relaxationszyklus während der Schruppoperation mehr als einmal wiederholt wird und die Schlichtbearbeitung unmittelbar danach erfolgt.

## Revendications

1. Support de la pièce dans lequel la pièce est fermée entre un premier et un seconde support, comprenant :
■ Un dispositif de compensation qui permet de enlever une contrainte radiale, placé entre la pièce et le support secondaire, dans lequel le dispositif de compensation peut être utilisé :
• fermé - la pièce et le support secondaire sont rigidement contraintes et le processus de la pièce peut se dérouler
• non fermé - la pièce est radialement libre de se déplacer- par rapport au support secondaire et, partant, la contrainte radiale est supprimée, l'activation du dispositif de compensation peut être effectuée sans enlever la pièce de la machine et sans perdre l'origine de la pièce, le dispositif de compensation permet le premier et seconde degré de liberté qui sont degrés de liberté de déplacement et permettent à la fin de la pièce de se déplacer en deux directions étendues sur un plan perpendiculaire au support d'axe en définissant la composition des vecteurs de déplacement en direction radiale et permettant ainsi l'assouplissement radial, réalisant ainsi une position complètement assouplie de la pièce, en débrayant tous types de stress sans d'autres opérations.
■ et un support secondaire peut etre utilise en configuration gantry de manière que soit couplée avec le support primaire, dans lequel le synchronisme imposé entre les deux supports contraint en torsion la pièce qui est processée,
caracterisé en:
■ le premier et le seconde supports sont à transmission directe avec rapport de transmission unitaire et
■ le support secondaire est utilisé en configuration axe simple, où le synchronisme de désactivation peut être effectué sans enlever la pièce de la machine et saris perdre son origine, qui est renvoyé à la première position du transducteur, où le support secondaire permet un degré de liberté qui se réfère à la rotation et qui permet à la fin de la pièce de tourner au tour du support axe et, en conséquence, permet l'assouplissement de torsion sans d'autres opérations.

2. Méthode d'utilisation du support de la pièce selon la revendication 1, dans laquelle la finition est effectuée immédiatement après l'ébauche et le cycle d'assouplissement.

3. Méthode d'utilisation du support de la pièce selon la revendication 1, dans laquelle le cycle d'assouplissement est répété plus qu'une fois pendant l'ébauche, et la finition est effectuée immédiatement après.
